# EUROPÄISCHE PATENTSCHRIFT

(11) **EP 0 468 074 B1**
(45) Veröffentlichungstag und Bekanntmachung des Hinweises auf die Patenterteilung: **02.11.1994**
(21) Anmeldenummer: 90114357.8
(22) Anmeldetag: 26.07.1990
(51) Int. Cl.: G01N 21/53

(54) **Vorrichtung zur Messung der Trübung von Rauchgas**
Device for measuring the turbidity of smoke
Dispositif de mesure de la turbidité d'une fumée

(43) Veröffentlichungstag der Anmeldung: 29.01.1992
(73) Patentinhaber: SIEMENS AKTIENGESELLSCHAFT, 80333 München (DE)
(72) Erfinder: Wunderling, Wilfried, D-8502 Zirndorf (DE); Fehm, Udo, D-8510 Braunsbach (DE)

(56) Entgegenhaltungen:
- DE-A- 1 673 230
- DE-C- 661 589
- DE-U- 9 002 458
- GB-A- 918 525

## Beschreibung

Die Erfindung betrifft eine Vorrichtung zur Messung der Trübung von Rauchgas gemäß dem ersten Teil des Anspruchs 1.

Eine derartige Vorrichtung ist aus dem Gebranchsmuster DE-U- 90 02 458 bekannt.

Bei einer derartigen Vorrichtung wird ein von einem Rauchgaserzeuger, z. B. einer Verbrennungskraftmaschine in einem Kraftfahrzeug, erzeugte Rauchgasstrom von einem Meßstrahl durchsetzt, und die von der Rauchgastrübung hervorgerufene Abschwächung des Meßstrahles ausgewertet. Der Meßstrahl wird dabei von einer Abstrahleinrichtung erzeugt. Nach Durchlaufen des Rauchgases wird die Abschwächung des Meßstrahles schließlich in einer gegenüberliegend angeordneten Empfangseinrichtung ausgewertet.
Wird eine derartige Vorrichtung beispielsweise zur Überwachung von nicht trockenem Rauchgas eingesetzt, d. h. beispielsweise von wasserdampf- bzw. ölnebelhaltigen Rauchgas, so ist es trotz möglicherweise vorhandener zusätzlicher konstruktiver Maßnahmen mittel und langfristig nicht auszuschließen, daß die optisch aktiven, d. h. die vom Meßstrahl durchsetzten Oberflächenbereiche auf der Abstrahl- und Empfangseinrichtung verschmutzen. So dient z. B. bei dem obengenannten Gebranchsmuster ein jeweils der Abstrahl- bzw. Empfangseinrichtung bevorzugt von hinten zugeführter Spülluftstrom, welcher bevorzugt über jeweils eine zusätzliche Luftleitkappe möglichst radialsymmetrisch vom Randbereich auf das Zentrum des vom Meßstrahl jeweils durchsetzten, optisch aktiven Oberflächenbereiches gelenkt wird, zur Sauberhaltung dieser Oberflächenbereiche. Dennoch ist es zumindest langfristig nicht auszuschließen, das sich Rauchgaspartikel auf den optisch aktiven Oberflächenbereichen niederschlagen, und eine Verfälschung der Meßergebnissee hervorrufen.

Der Erfindung liegt die Aufgabe zugrunde, eine Vorrichtung zur Messung der Trübung von Rauchgas, welche in etwa der in dem genannten Gebranchsmuster enthaltenen Vorrichtung entsprechen kann, so auszugestalten, daß bei Bedarf die vom Meßstrahl durchsetzten optisch aktiven Oberflächenbereiche jederzeit insbesondere zu Reinigungszwecken zugänglich sind, und die Meßvorrichtung nach Ausführung derartiger Arbeiten ohne jegliche Abgleiche und Kalibrierungen wieder in den einsatzfähigen Zustand mit optimaler Meßgenauigkeit zurückversetzt werden kann.

Die Aufgabe wird gelöst mit der im Anspruch 1 enthaltenen Vorrichtung. Vorteilhafte Ausgestaltungen der Erfindung sind in den Unteransprüchen enthalten.

Die Erfindung wird desweiteren anhand dem in den nachfolgend kurz angeführten Figuren dargestellen bevorzugten Ausführungsbeispiel näher erläutert. Dabei zeigt
- FIG 1: ein bevorzugtes Ausführungsbeispiel der erfindungsgemäßen Meßvorrichtung, wobei sich das Meßrohr in einer ersten Stellung so zwischen der Abstrahl- und Empfangseinrichtung befindet, daß die Meßrohrachse möglichst mit der optischen Achse des Meßstrahles zusammenfällt,
- FIG 2: die Meßvorrichtung von Figur 1, wobei sich das Meßrohr in einer zweiten, aus dem Bereich zwischen der Abstrahl- und Empfangseinrichtung herausgeschwenkten Stellung findet, und
- FIG 3: die Meßvorrichtung von Figur 1, wobei Einzelheiten des Meßrohres zur besseren Übersicht zeichnerisch in Form eines Schnittes bzw. Ausbruches dargestellt sind.

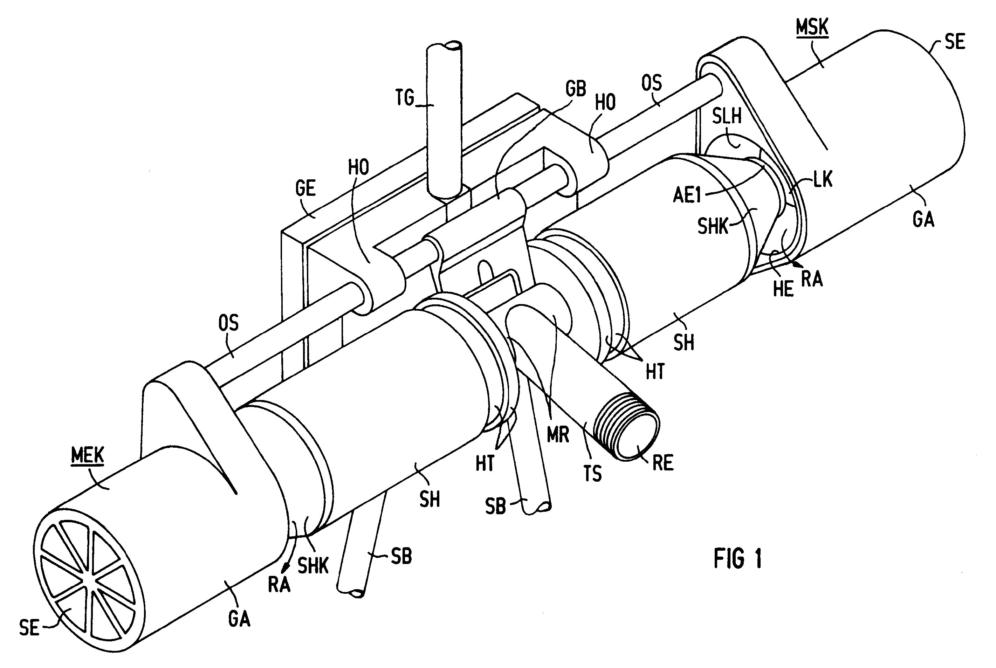

Bei den Erläuterungen der Figuren 1 bis 3 werden soweit wie möglich für entsprechende Teile die gleichen Bezeichnungen und Bezugszeichen verwendet, wie sie bereits bei der Beschreibung der in dem genannten Gebranchsmuster beschriebenen Vorrichtung verwendet wurden.

So enthält die Meßvorrichtung bevorzugt einen sogenannten Meßsendekopf MSK als Abstrahleinrichtung zur Erzeugung des den Rauchgasstrom durchsetzenden Meßstrahles. Demgegenüber angeordnet ist ein sogenannter Meßempfangskopf MEK als Empfangseinrichtung für den durch, den Rauchgasstrom hindurchgelaufenen Meßstrahl. Meßsende- und Meßemfangskopf sind dabei in ihrem Inneren bevorzugt in der gleichen Weise aufgebaut, wie dies in dem obengenannten Gebranchsmuster niedergelegt ist. Der Einfachheit halber werden Details des inneren Aufbaues des Meßsende- und Meßempfangskopfes nicht wiederholt, sondern es wird diesbezüglich auf die Offenbarung des obengenannten Gebranchsmusters verwiesen. In Figur 1 ist lediglich beispielhaft der Eintritt SE für den Spüllufstrom am Ende des jeweiligen Kopfes, und das Ende HE der bevorzugt trichter- bzw. düsenförmig erweiterten Luftleithülse SLH im Inneren des jeweiligen Kopfes dargestellt.

Erfindungsgemäß sind die Abstahl- und Empfangseinrichtung mit Hilfe von ersten Haltemitteln in Form einer optischen Bank gegenüberliegend miteinander verbunden. Bevorzugt ist diese Verbindung derart starr, verwindungs- und rüttelfrei, daß die Positionen der gegenüberliegenden Abstrahl- und Empfangseinrichtungen in jedem Fall unverändert sind. Bei dem in den Figuren dargestellen bevorzugten Ausführungsbeispiel sind zwei bevorzugt parallele Haltestangen OS, US wesentliche Bestandteile der ersten Haltemittel. Mit ihrer Hilfe ist eine starre, einer optischen Bank entsprechende Verbindung der Abstrahl- und Empfangseinrichtung MSK, MEK bevorzugt über deren Gehäuse möglich. Der Zwischenraum zwischen der Abstrahl- und der Empfangseinrichtung, welcher vom Meßstrahl durchsetzt wird, ist somit völlig frei von irgendwelchen störenden Teilen. Das zur Rauchgasführung dienende Meßrohr MR der erfindungsgemäßen Meßvorrichtung kann somit problemlos in diesem Zwischenraum angeordnet werden.

Eine derartige Anordnung hat den Vorteil, daß die optisch aktiven Oberflächenbereiche auf der Abstrahl- und Empfangseinrichtung, d. h. letztlich der Vorlauf des Meßstrahles zwischen beiden Einrichtungen, völlig unbeeinflußt von der Rauchgaszuführung und Weiterleitung durch das Meßrohr justiert und kalibriert werden kann.

Gemäß einer weiteren Ausführungsform sind die eine optische Bank bildenden ersten Haltemittel, insbesondere die beiden Haltestangen OS, US möglichst in der Mitte eines Gestelles angebracht. In der Figur 1 sind beispielhaft die Stützbeine SB und die Tragestange TG eines derartigen Gestelles dargestellt. Gemäß einer weiteren, in der Figur 1 bereits dargestellten Ausführungsform sind die beiden Haltestangen OS, US nur mittelbar beispielsweise mit dem Gestell verbunden. Vielmehr sind diese bevorzugt in der Mitte an einem zusätzlichen Gehäuse GE angebracht, welches insbesondere zur Aufnahme von Stromversorgungen und/oder Meßsignalauswerteschaltungen für die Abstrahl- und Empfangseinrichtung dienen kann. Bei dem in den Figuren dargestellten Ausführungsbeispiel sind jeweils zwei Halteösen H0 zur Verbindung der jeweiligen Haltestange mit dem Gehäuse GE vorgesehen. Schließlich ist das Gehäuse ebenfalls bevorzugt in der Mitte mit dem Gestell verbunden.
Gemäß einer anderen, nicht dargestellten Ausführungsform kann statt des Gehäuses GE auch eine Verbindungsplatte oder etwas ähnliches zur Halterung der beiden Haltestangen vorgesehen sein. In jedem Falle bilden aber die beiden bevorzugt parallelen Haltestangen OS, US aufgrund deren gemeinsamer Lagerung an bevorzugt vier Punkten eines die beiden Stangen verbindenden Bauteiles, z. B. des Gehäuses GE, eine äußerst starre, verwindungs- und erschütterungsfreie Verbindung für die Abstrahl- und Empfangseinrichtung. Der vom Meßsendekopf MSK abgehende Meßstrahl kann somit äußerst genau und langzeitstabil auf den optisch aktiven Oberflächenbereich im Inneren des Meßempfangskopfes MEK orientiert werden. Es wird somit trotz eines tagtäglichen Einsatzes der Meßvorrichtung und relativ rauher Handhabung derselben z. B. in Kraftfahrzeugwerkstätten auch langfristig nicht notwendig sein, die Ausrichtung des Meßsende- und Empfangskopfes auf der als optische Bank dienenden ersten Haltemitteln zu korrigieren bzw. nachzujustieren.

Vorteilhaft können die ersten Haltemittel zudem dazu genutz werden, um in ihrem Inneren inbesondere zur Stromversorung und Meßsignalleitung dienende Kabelverbindungen zur Abstahl- und Empfangseinrichtung MSK, MEK zu führen.

Die erfindungsgemäße Meßvorrichtung enthält des weiteren ein Meßrohr MR, dem das Rauchgas bevorzugt in der Rohrmitte zugeführt wird und an mindestens zwei gegenüberliegenden Austrittsenden AE1, AE2 wieder entweicht. Bei der in den Figuren dargestellten Ausführungsform ist vorteilhaft zur Zuführung des Rauchgases bevorzugt in der Mitte des Meßrohres MR eine weitere Teilstromsonde TS vorgesehen. Diese stutzenförmige Zuführung dient somit als Eintritt RE für das Rauchgas in das Meßrohr. An die Teilstromsonde TS können bevorzugt über weitere, flexible Rohrleitungen z. B. Abgasanlagen von Kraftfahrzeugen an das Meßgerät angeschlossen werden. Das dem Meßrohr MR bevorzugt über die Teilstromsonde TS zugeführte Rauchgas teilt sich in dessen Inneren in zwei Teilströmungen auf, welche an zwei gegenüberliegenden Austrittsenden AE1, AE2 des Meßrohres wieder entweichen.

In der Figur 1 befindet sich das Meßrohr in einer ersten Stellung so zwischen der Abstrahl-und Empfangseinrichtung, daß die Meßrohrachse möglichst mit der optischen Achse des Meßstrahles zusammenfällt. In dieser Position kann die von der Trübung des Rauchgases hervorgerufene Abschwächung des Meßstrahles von der Meßvorrichtung ausgewertet werden. In dieser genannten Arbeitsposition des Meßrohres strömt somit das Rauchgas nahezu direkt auf die optisch aktive Oberflächenbereiche FF des Meßsendekopfes MSK bzw. MEK zu. Das Rauchgas wird dabei unter Zuhilfenahme des Spülluftstromes SE aus dem bevorzugt trichterförmig erweiterten Ende HE der jeweiligen Luftleithülse SLH abgefördert. In der Figur 1 sind diese Rauchgasaustritte RA durch einen Pfeil dargestellt. Nähere Einzelheiten über das Strömungsprinzip, und die Führung des Rauchgases und des Spülluftstromes sind dem obengenannten Gebranchsmuster im Detail zu entnehmen.

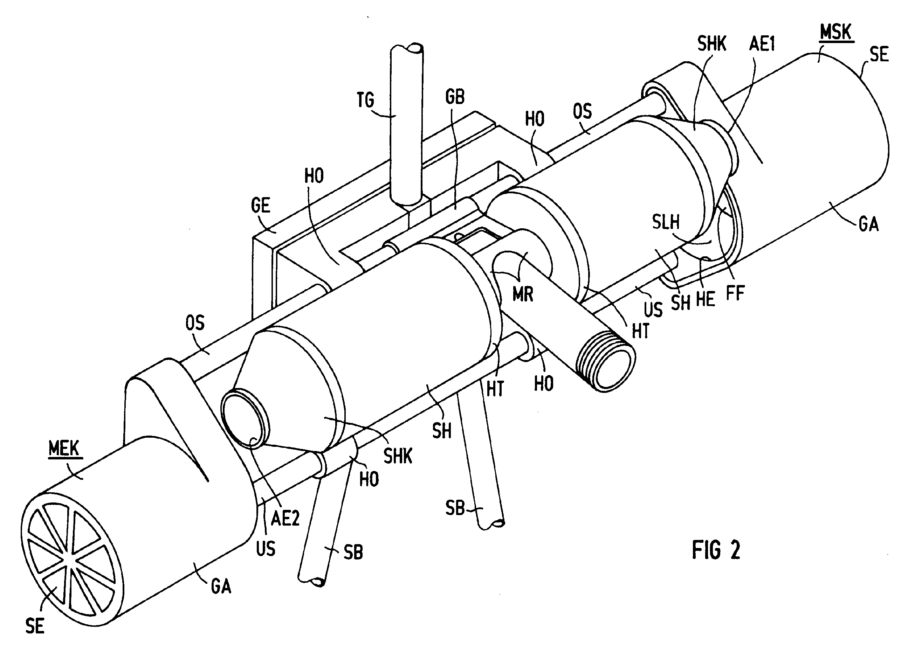

Erfindungsgemäß sind zweite Haltemittel für das Meßrohr vorgesehen, welche drehbar an den ersten Haltemitteln angebracht sind. Mit Hilfe der zweiten Haltemittel ist es möglich, daß das Meßrohr zumindest zwei unterschiedliche Stellungen einnehmen kann. Diese beiden Stellungen sind beispielhaft in der Figur 1 bzw. 2 dargestellt. In der ersten Stellung liegt das Meßrohr gemäß Figur 1 derart zwischen der Abstrahl- und Empfangseinrichtung, daß die Meßrohrachse möglichst mit der optischen Achse des Meßstrahles zusammenfällt. In diesem eingefahrenen Zustand des Meßrohres kann die Meßvorrichtung in der gewünschten Weise zur Auswertung der Trübung von Rauchgas verwendet werden. In der zweiten Stellung des Meßrohres gemäß Figur 2 ist dieses aus dem Bereich zwischen der Abstrahl- und Empfangseinrichtung MSK, MEK herausgeschwenkt. In dieser Stellung ist es möglich, Service- und Wartungsarbeiten am Meßgerät vorzunehmen. So können z. B. Verschmutzungen im Inneren des Meßrohres durch Eingriff in die Austrittsenden AE1, AE2 und Verschmutzungen der optisch aktiven Oberflächenbereich FF der Abstrahl- und Empfangseinrichtung durch Eingriff in das bevorzugt trichterförmig erweiterte Ende HE der jeweiligen Luftleithülse SLH beseitigt werden. Desweiteren sind nun die Luftleitkappen LK und die optischen Einrichtungen im Inneren des jeweiligen Kopfes direkt zugänglich und unter Umständen herausnehmbar. Gemäß der in den Figuren dargestellten bevorzugten Ausführungsform enthalten die zweiten Haltemittel einen Gelenkbügel GB, welcher möglichst in der Mitte der ersten Haltemittel angebracht ist. Besonders vorteilhaft ist dieser Gelenkbügel möglichst in der Mitte einer der Haltestangen drehbar gelagert und ebenfalls möglichst in der Mitte des Meßrohres MR mit diesem verbunden. Besonders vorteilhaft dient als Drehlager für den Gelenkbügel GB die obere Haltestange OS. Bei einer derartigen Ausführung schwenkt das Meßrohr beispielsweise nach Beendigung von Reinigungsarbeiten unter dem Einfluß der Gravitation nahezu selbstständig von der zweiten Stellung in die erste Stellung zwischen die Abstrahl- und Empfangseinrichtung zurück. Vorteilhaft sind desweiteren nicht dargestellte Arretiermittel vorhanden, insbesondere Feststellschrauben u. ä, mit denen das Meßrohr in der ersten Stellung mit den ersten Haltemitteln, insbesondere einer der beiden Haltestangen dem im Gehäuse GE, fixiert werden kann.

Die erfindungsgemäße Verbindung der Abstahl- und Empfangseinrichtung über die ersten Haltemittel und die drehbare Lagerung des Meßrohres an diesen mit Hilfe der zweiten Haltemittel hat den besonderen Vorteil, daß das Meßrohr MR in zum Teil mechanisch von dem Meßsende- und Meßempfangskopf entkoppelt ist. Insbesondere sind keinerlei mechanische Elemente notwendig, welche das jeweilige Austrittsende AE1 bzw. AE2 des Meßrohres direkt mit dem gegenüberliegenden Meßsende- bzw. Meßempfangskopf verbinden. Das jeweilige Austrittsende ragt somit der Darstellung von Figur 1 völlig frei in das Innere des Austrittsendes HE der jeweiligen Luftleithülse SLH hinein. Dies hat den besonderen Vorteil, daß z. B. von einer Abgasanlage eines Kraftfahrzeuges über die Teilstromsonde TR auf das Meßrohr MR übertragene Schwingungen sich nur indirekt über die insbesondere aus dem Gelenkbügel GB bestehenden zweiten Haltemittel auf die bevorzugt aus den beiden Haltestangen OS, US und gegebenenfalls das Gehäuse GE gebildeten optischen Bank fortpflanzen. Das Meßrohr kann somit aufgrund der erfindungsgemäßen Halterung über die zweiten Haltemittel bis zu einem gewissen Grad mechanische Bewegungen bzw. Schwingungen ausführen, ohne daß hierdurch die Meßgenauigkeit der Meßvorrichtung beeinträchtigt wird. Die Ursache hierfür liegt darin, daß der Querschnitt des den Rauchgasstrom durchsetzenden Meßstrahles in aller Regel erheblich kleiner ist als die Querschnittsfläche des Meßrohres MR insbesondere an deren Austrittsenden AE1 und AE2.
Diese mechanische Entkopplung der Abstrahl- und Empfangseinrichtung vom Meßrohr wird gemäß der in den Figuren dargestellten bevorzugten Ausführungsform desweiteren dadurch begünstigt, daß alle Elemente der Meßvorrichtung möglichst in ihrem Schwehr- bzw. Drehpunkt gelagert sind. So sind die Teilstromsonde TS und der Gelenkbügel GB möglichst in der Mitte des Meßrohres MR angebracht. Zudem ist der Gelenkbügel vorteilhaft in der Mitte der oberen Haltestange OS drehbar gelagert. Schließlich sind die ersten Haltemittel und das möglicherweise vorhandene Gehäuse GE ebenfalls im Gleichgewichtspunkt bevorzugt in der Mitte mit dem Gestell verbunden.

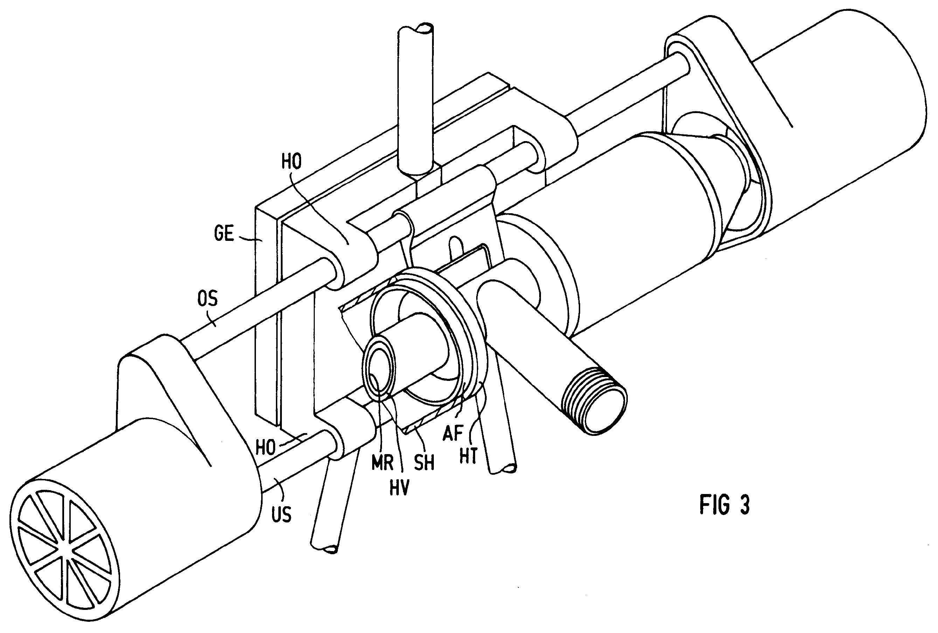

Gemäß einer weiteren Ausführungsform ist das Meßrohr MR zumindest zum Teil mit einer Wärmeschutzvorrichtung umgeben. Diese soll verhindern, daß Personen bei einer Berührung der Meßvorrichtung mit dem unter Umständen relativ hohe Temperaturen annehmenden Meßrohr direkt in Kontakt kommen können. Bei den in den Figuren 1 und 3 dargestellten Ausführungsformen besteht diese Wärmeschutzvorrichtung aus jeweils einer Schutzhülse SH, welche am jeweiligen Austrittsende AE1 bzw. AE2 des Meßrohres von einer bevorzugt trichter- bzw. düsenförmigen Schutzkappe SHK abgeschlossen wird. Gemäß den Darstellungen in den Figuren ist somit die Wärmeschutzvorrichtung in diesen Fällen zweiteilig ausgeführt, und besteht aus jeweils einer, etwa eine Hälfte des Meßrohres umfassenden Einheit aus einer Schutzhülse SH und einer Schutzkappe SHK. Zur Halterung der Schutzhülsen sind bevorzugt sogenannte Halteteller HT vorgesehen, welche bevorzugt in der Mitte des Meßrohres MR rechts und links der als Rauchgaseintritt RE dienenden Teilstromsonde TS angebracht sind.
Gemäß einer weiteren, in den Figuren 1 und 3 bereits dargestellten Ausführungsform sind die Einheiten aus Schutzhülse und Schutzkappe entlang der Meßrohrachse verschiebbar. Dies hat den Vorteil, daß bei der in der Figur 1 dargestellten ersten Stellung des Meßrohres die Einheiten aus Schutzhülle und Schutzkappe geringfügig in das Innere des Endes HE der jeweiligen Luftleithülse SLH der Abstrahl- und Empfangseinrichtung eingeschoben werden können. Hierdurch kann zur Erhöhung der Meßgenauigkeit der aus dem jeweiligen Austrittsende AE1 bzw. AE2 des Meßrohres austretende Rauchgasstrom noch direkter auf den optisch aktiven Oberflächenbereich FF der Abstrahl- bzw. Empfangseinrichtung gerichtet werden. Zudem kann aufgrund der geringfügigen Verlängung des Querschnittes am Hülsenende HE der jeweiligen Luftleithülse SLH die rauchgasabfördernde Wirkung des Spülluftstromes verbessert werden. In Figur 1 sind für die erste Stellung des Meßrohres die jeweilige Schutzhülse und Schutzkappe im ausgeschobenen Zustand dargestellt, während sie gemäß der Darstellung von Figur 2 zum Ausschwenken des Meßrohres aus dem Bereich zwischen der Abstrahl- und Empfangseinrichtung zurückgeschoben werden müssen. Die Verschiebbarkeit der Schutzhülsen wird bevorzugt durch eine besondere Ausgestaltung der jeweiligen Halteteller ermöglicht. Diese verfügen gemäß der Schnittdarstellung von Figur 3 bevorzugt jeweils über einen Auflagering AF, welcher als Gleitfläche zur Verschiebung der Einheit aus Schutzhülse und Schutzkappe entlang der Meßrohrachse dient. In Figur 3 ist eine weitere Ausführungsform der Meßvorrichtung dargestellt. Dabei ist das Meßrohr MR zumindest teilweise mit einer zusätzlichen, bevorzugt elektrischen Heizvorrichtung HV umgeben. Diese Heizvorrichtung dient insbesondere bei der Inbetriebnahme des Meßgerätes zu einer gleichmäßigen Erwärmung der Wandungen des Meßrohres MR. Hiedurch können Kondensierungen von Rauchgasbestandteilen auf der Meßrohrinnenfläche vermieden werden. Schließlich sind der Meßsende- und Meßempfangskopf MSK, MEK jeweils mit einer bevorzugt aus Gummi bestehenden Stoßschutzabdeckung GA versehen.

## Patentansprüche

1. Vorrichtung zur Messung der Trübung von Rauchgas, mit
a) einer Abstrahleinrichtung (MSK) zur Erzeugung eines den Rauchgasstrom durchsetzenden Meßstrahles,
b) einer Empfangseinrichtung (MEK) zur Auswertung der durch die Rauchgastrübung hervorgerufenen Abschwächung des Meßstrahles,
c) ersten Haltemitteln (OS, US; GE) für die Abstrahl- und Empfangseinrichtung, welche beide Einrichtungen (MSK, MEK) in Form einer optischen Bank gegenüberliegend miteinander verbinden,
d) einem Meßrohr (MR), dem das Rauchgas bevorzugt in der Rohrmitte zugeführt wird und an mindestens zwei gegenüberliegenden Austrittsenden (AE1), AE2) entweicht, dadurch gekennzeichnet, daß die Vorrichtung
e) zweiten Haltemitteln (GB) für das Meßrohr (MR), welche drehbar so an den ersten Haltemitteln (OS, US; GE) angebracht sind, daß das Meßrohr (MR)
1) in eine erste Stellung (Figur 1) zwischen die Abstrahl- und Empfangseinrichtung einschwenkbar ist, bei der die Meßrohrachse möglichst mit der optischen Achse des Meßstrahles zusammenfällt, und
2) in eine zweite Stellung (Figur 2) aus dem Bereich zwischen der Abstrahl- und Empfangseinrichtung (MSK, MEK) herausschwenkbar ist.

2. Vorrichtung nach Anspruch 1,
**dadurch gekennzeichnet**, daß die ersten Haltemittel (OS, US) bevorzugt in deren Mitte an einem Gestell (SB, TG) angebracht sind.

3. Vorrichtung nach Anspruch 1,
**dadurch gekennzeichnet**, daß die ersten Haltemittel (OS, US) bevorzugt in deren Mitte an einem Gehäuse (GE) angebracht sind, welches insbesondere zur Aufnahme von Stromversorgungen und/oder Meßsignalauswerteschaltungen für die Abstrahl- und Empfangseinrichtung dient.

4. Vorrichtung nach Anspruch 3,
**dadurch gekennzeichnet**, daß das Gehäuse (GE) bevorzugt in dessen Mitte an einem Gestell (SB, TG) angebracht ist.

5. Vorrichtung nach einem der vorausgegangenen Ansprüche,
**dadurch gekennzeichnet**,daßKabelverbindungen insbesondere zur Stromversorgung und Meßsignalleitung im Inneren der ersten Haltemittel (OS, US) zur Abstrahl- bzw. Empfangseinrichtung (MSK, MEK) geführt sind.

6. Vorrichtung nach einem der vorausgegangenen Ansprüche,
**dadurch gekennzeichnet**, daß die ersten Haltemittel zwei Haltestangen (OS, US) enthalten, an deren Enden jeweils die Abstrahl- bzw. Empfangseinrichtung (MSK, MEK) gegenüberliegend angebracht sind.

7. Vorrichtung nach Anspruch 6,
**dadurch gekennzeichnet**, daß die zweiten Haltemittel einen Gelenkbügel (GB) enthalten, welcher bevorzugt in der Mitte einer der Haltestangen (OS bzw. US) drehbar gelagert ist und bevorzugt in der Mitte des Meßrohres mit diesem verbunden ist.

8. Vorrichtung nach einem der vorausgegangenen Ansprüche,
**dadurch gekennzeichnet**, daß das Meßrohr (MR) zumindest teilweise mit mindestens einer Heizvorrichtung (HV) umgeben ist.

9. Vorrichtung nach einem der vorausgegangenen Ansprüche,
**dadurch gekennzeichnet**, daß das Meßrohr (MR) zumindest vom Punkt der Rauchgaszuführung ab bis hin zum Austrittsende (AE1, AE2) jeweils mit einer Wärmeschutzvorrichtung (HT, SH, SHK) umgeben ist.

10. Vorrichtung nach Anspruch 9,
**dadurch gekennzeichnet**, daß die Wärmeschutzvorrichtung mindestens eine zumindest das Meßrohr (MR) teilweise umfassende Schutzhülse (SH) enthält, welche am jeweiligen Austrittsende (AE1, AE2) des Meßrohres von einer bevorzugt trichter- bzw. düsenförmiger Schutzkappe (SHK) abgeschlossen wird.

11. Vorrichtung nach Anspruch 10,
**dadurch gekennzeichnet**, daß die Einheit aus Schutzhülse (SH) und Schutzkappe (SHK) entlang der Meßrohrachse verschiebbar ist.

## Claims

1. Device for measuring the turbidity of combustion gas, comprising
a) a radiation device (MSK) for producing a measuring beam passing through the stream of combustion gas,
b) a detection device (MEK) for evaluating the attenuation of the measuring beam caused by the turbidity of the combustion gas,
c) first mounting means (OS, US; GE) for the radiation and detection devices which connect the two devices (MSK, MEK) together opposite one another in the form of an optical bench,
d) a measuring tube (MR) into which the stream of combustion gas is introduced, preferably in the middle of the tube, and from which it escapes at at least two opposite outlet ends (AE1, AE2),
the device being characterised by
e) second mounting means (GB) for the measuring tube (MR) which are attached rotatably to the first mounting means (OS, US; GE) in such a way that the measuring tube (MR)
1) can be pivoted in into a first position (Figure 1) between the radiation and detection devices wherein the axis of the measuring tube coincides as closely as possible with the optical axis of the measuring beam, and
2) can be pivoted out from the region between the radiation and detection devices into a second position (Figure 2).

2. Device according to claim 1, characterised in that the first mounting means (OS, US) are attached, preferably in their middle, to a stand (SB, TG).

3. Device according to claim 1, characterised in that the first mounting means (OS, US) are attached, preferably in their middle, to a housing (GE) which serves particularly to accommodate power supplies and/or measuring signal evaluation circuits for the radiation and detection devices.

4. Device according to claim 3, characterised in that the housing (GE) is attached, preferably in its middle, to a stand (SB, TG).

5. Device according to one of the preceding claims, characterised in that cable connections, particularly for power supply and measuring signals, are run in the interior of the first mounting means (OS, US) to the radiation and detection devices (MSK, MEK).

6. Device according to one of the preceding claims, characterised in that the first mounting means includes two mounting bars (OS, US) to the ends of which the radiation and receiving devices (MSK, MEK) are respectively attached.

7. Device according to claim 6, characterised in that the second mounting means includes a hinge strap (GB) which is mounted rotatably preferably in the middle of one of the mounting bars (OS or US) and is connected to the measuring tube, preferably in the middle thereof.

8. Device according to one of the preceding claims, characterised in that the measuring tube (MR) is at least partly surrounded by at least one heating device (HV).

9. Device according to one of the preceding claims, characterised in that the measuring tube (MR) is surrounded, at least from the combustion gas supply point to the outlet end (AE1, AE2) with a respective heat shielding device (HT, SH, SHK).

10. Device according to claim 9, characterised in that the heat shielding device comprises at least one protective sleeve (SH) partly surrounding at least the measuring tube (MR) which is closed at the respective outlet end (AEl, AE2) of the measuring tube by a preferably funnel- or nozzle-shaped protective cap (SHK).

11. Device according to claim 10, characterised in that the unit comprising protective sleeve (SH) and protective cap (SHK) can be slid along the axis of the measuring tube.

## Revendications

1. Dispositif de mesure de la turbidité de fumées, comportant
a) un dispositif d'émission (MSK) destiné à produire un faisceau de mesure traversant le courant de fumées,
b) un dispositif de réception (MEK) destiné à évaluer l'atténuation du faisceau de mesure provoquée par l'opacité des fumées,
c) de premiers éléments de support (OS, US, GE) du dispositif d'émission et du dispositif de réception, lesquels deux dispositifs (MSK, MEK) disposés face à face sont reliés entre eux sous la forme d'un banc optique,
d) un tube de mesure (MR), dans lequel, de préférence au mi!ieu, les fumées sont envoyées et se dégagent par au moins deux extrémités de sortie (AE1, AE2) opposées,
e) des deuxièmes éléments de supports (GB) du tube de mesure (MR), qui sont montés tournants sur les premiers éléments de support (OS, US, GE), de sorte que le tube de mesure (MR)
1) dans une première position (figure 1) bascule entre le dispositif d'émission et celui de réception, dans laquelle l'axe du tube de mesure coïncide le plus possible avec l'axe optique du faisceau de mesure, et
2) dans une deuxième position (figure 2) bascule hors de l'espace compris entre le dispositif d'émission et celui de réception (MSK, MEK).

2. Dispositif selon la revendication 1,
caractérisé en ce que, les premiers éléments de support (OS, US) sont montés de préférence en leur milieu sur un bâti (SB TG)

3. Dispositif selon la revendication 1,
caractérisé en ce que les premiers éléments de support (OS, US) sont montés de préférence en leur milieu sur un boîtier (GE), qui sert notamment à recevoir les alimentations en courant électrique et/ou les circuits d'exploitation des signaux de mesure pour le dispositif d'émission et le dispositif de réception.

4. Dispositif selon la revendication 3
caractérisé en ce que, le boîtier (GE) est monté de préférence en son milieu sur un bâti (SB, TG).

5. Dispositif selon l'une ou l'autre des précédentes revendications,
caractérisé en ce que des liaisons câblées en particulier pour l'alimentation électrique et la transmission des signaux de mesure sont amenées à l'intérieur des premiers éléments supports (OS, US) au dispositif d'émission et au dispositif de réception (MSK, MEK).

6. Dispositif selon l'une des revendications précédentes,
caractérisé en ce que les premiers éléments de support comportent deux barres de support (OS, US), aux extrémités desquelles, sont montés face à face le dispositif d'émission et le dispositif de réception (MSK, MEK).

7. Dispositif selon la revendication 6,
caractérisé en ce que, les deuxièmes dispositifs de support comportent un étrier d'articulation (GB) monté orientable de préférence sur le milieu de l'une des barres support (OS ou US) et relié au tube de mesure, de préférence au milieu de celui-ci.

8. Dispositif selon l'une des revendications précédentes,
caractérisée en ce que le tube de mesure (MR) est entouré au moins en partie d'au moins un dispositif de chauffage (HV).

9. Dispositif selon l'une des revendications précédentes,
caractérisé en ce que le tube de mesure (MR) est entouré, au moins du point d'introduction des fumées jusqu'aux extrémités de sortie (AE1, AE2) d'un dispositif de protection thermique (HT, SH, SHK)

10. Dispositif selon la revendication 9,
caractérisé en ce que, le dispositif de protection thermique comprend au moins une gaine de protection (SH) qui entoure au moins partiellement le tube de mesure (MR), et qui à chacune des extrémités de sortie (AE1, AE2) du tube de mesure est fermée par un couvercle de protection, de préférence en forme d'entonnoir ou de buse (SHK).

11. Dispositif selon la revendication 10
caractérisé en ce que, l'ensemble formé par la gaine de protection (SH) et le couvercle de protection (SHK) est monté coulissant le long du tube de mesure.
